(19) **Europäisches Patentamt / European Patent Office / Office européen des brevets**

(11) **EP 2 392 139 B1**

(12) # EUROPEAN PATENT SPECIFICATION

(45) Date of publication and mention
of the grant of the patent:
**18.09.2013 Bulletin 2013/38**

(21) Application number: **09778991.1**

(22) Date of filing: **29.01.2009**

(51) Int Cl.:
*H04N 7/26* (2006.01)     *H04N 7/50* (2006.01)

(86) International application number:
**PCT/EP2009/051028**

(87) International publication number:
**WO 2010/086018 (05.08.2010 Gazette 2010/31)**

(54) **METHOD AND APPARATUS FOR EFFICIENT HARDWARE MOTION ESTIMATION**

VERFAHREN UND VORRICHTUNG ZUR EFFIZIENTEN HARDWARE-BEWEGUNGSSCHÄTZUNG

PROCÉDÉ ET APPAREIL D'ESTIMATION DE MOUVEMENT MATÉRIELLE EFFICACE

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(43) Date of publication of application:
**07.12.2011 Bulletin 2011/49**

(73) Proprietor: **Telefonaktiebolaget LM Ericsson
(publ)
164 83 Stockholm (SE)**

(72) Inventor: **DENCHER, Anthony
Southampton SO31 4HF (GB)**

(74) Representative: **Barrett, Peter Andrew John et al
Ericsson Limited
Patent Unit Optical Networks
Unit 4 Midleton Gate
Guildford Business Park
Guildford, Surrey GU2 8SG (GB)**

(56) References cited:
**US-A1- 2004 047 422     US-A1- 2004 247 029
US-A1- 2005 069 037     US-A1- 2007 086 525
US-A1- 2007 183 504**

- **Z. CHEN, P. ZHOU, Y. HE: "Fast Integer Pel and
Fractional Pel Motion Estimation for JVT" JOINT
VIDEO TEAM (JVT) OF ISO/IEC MPEG & ITU-T
VCEG, no. JVT-F017, 5 December 2002
(2002-12-05), - 13 December 2002 (2002-12-13)
pages 1-13, XP002548236 Awaji, Island**
- **HER-MING JONG ET AL: "Parallel architectures
of 3-step search block-matching algorithm for
video coding" CIRCUITS AND SYSTEMS, 1994.
ISCAS '94., 1994 IEEE INTERNATIONAL SYMPOS
IUM ON LONDON, UK 30 MAY-2 JUNE 1994, NEW
YORK, NY, USA,IEEE, US, vol. 3, 30 May 1994
(1994-05-30), pages 209-212, XP010143174 ISBN:
978-0-7803-1915-8**
- **ZHONGLI HE ET AL: "An efficient VLSI
architecture for new three-step search algorithm"
CIRCUITS AND SYSTEMS, 1995.,
PROCEEDINGS., PROCEEDINGS OF THE 38TH
MID WEST SYMPOSIUM ON RIO DE JANEIRO,
BRAZIL 13-16 AUG. 1995, NEW YORK, NY, USA,
IEEE, US, vol. 2, 13 August 1995 (1995-08-13),
pages 1228-1231, XP010165352 ISBN:
978-0-7803-2972-0**

**EP 2 392 139 B1**

## Description

## Technical Field

The invention is related to digital video compression in general, and in particular to an improved method of, and apparatus for, the Motion Estimation stage in such digital video compression methods.

## Background

During the Motion Estimation stage, analysis of a sequence of pictures from the video stream is carried out in order to measure the ways in which elements of each picture move from picture to picture, and to express these movements in the form of Motion Vectors (MV).

Video compression methods are used within digital television broadcasting systems to reduce the data rate per channel while maintaining picture quality. It is a primary objective of these methods that the instantaneous demand for transmission capacity of the moving television picture sequence is substantially met at all times despite its varying complexity. Typical transmission channels used to convey audio-visual material have fixed bit rates and so the varying demand for capacity of the picture sequence may not always be satisfied.

It is an inevitable result of the process that for extremes of highly complex picture behaviour the picture quality may occasionally be compromised in order that the bit rate criteria are met. By choosing a bit rate that is too low, poor quality will result for a significant proportion of the time. Conversely, a bit rate that is too high will meet quality needs, but will waste transmission capacity for a significant proportion of the time. Thus, some kind of control mechanism is required that evens out the peaks and troughs of demand so that a given fixed bit rate is adequate to deliver good picture quality at all times.

Part of such control should ideally take some objective measure of the picture quality into account, so that the distortion in the picture is known to some degree. A key parameter in this process is the Quantisation Parameter (QP) whose value determines the degree of quantisation applied, thereby ultimately controlling the final bit rate.

The optimisation of this whole process is called Rate Distortion Optimisation (RDO) and it is an inherent part of practical realisations of modern compression methods. RDO aims to balance between the bits spent on a picture and the distortion in the picture to give the most efficient video encoding. The MV search method and apparatus described herein provides improved compression data (in the form of MV candidates) to the RDO process for the RDO process to work with, but is not itself part of RDO.

The complex methods currently employed have become very sophisticated and use a variety of techniques in concert to achieve the objective of coding complex picture sequences using minimum bit rate. Typically, in such methods the compressed picture sequence of the television signal is hierarchically structured at a number of levels, each enabling the full set of coding tools available to be applied efficiently.

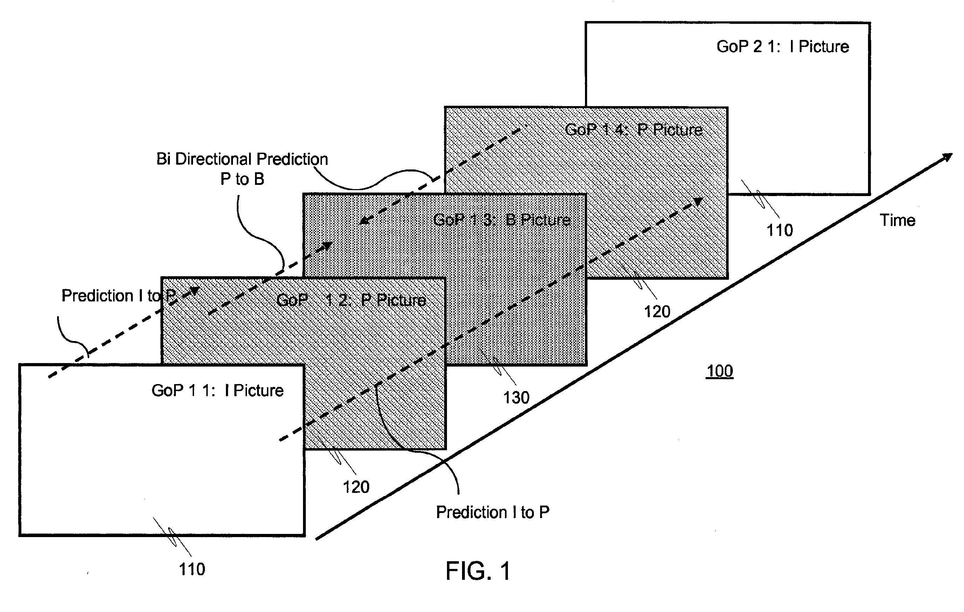

At the highest of these levels, the picture sequence is organised into contiguous Groups of Pictures (GOP) 100 (see Fig. 1) and each group is further organised so that the first picture of each GOP is coded without reference to any other picture in the sequence. This is known as Intra-picture coding and the resultant picture is called an I picture 110. Subsequent pictures in the GOP are coded differentially with respect to other pictures in the GOP, including the initial I picture 110. For example, the second picture in the GOP is typically predicted directly from the I picture 110 and the differences between them, being small, are then coded. The resultant picture is known as a Predicted or P picture 120, Typically the number of bits required to code this P picture 120 is smaller than that needed for an I picture 110. The next picture of the GOP may also be predicted in turn from this P picture 120 and this pattern may repeat for the remainder of the GOP. These P predictions are uni-directional and use past pictures to predict future ones in a sequence of mutual dependence.

It is also possible to code pictures in the GOP using Bi-directional prediction, that is, potentially using both past and future pictures and so this is known as a B picture 130. A B picture 130 typically needs fewer bits than a P picture 120.

Thus, a typical simple GOP may utilise more B 130 and P 120 pictures relative to the number of I pictures 110. For example, they may have a structure such as that illustrated by Fig. 1 that is a short example of the form IPBP, which repeats for each successive GOP. A more typical structure might have many more B and P pictures, such as IPPBPPB or IBBPBBP etc. The absolute GOP structure 100 and GOP length are arbitrary and may be set by the system designer to suit the needs of a given application. It should be noted in Fig. 1 that the B picture 130 can not be coded until the following P picture 120 has itself been coded. Furthermore this B picture 130 cannot be decoded until the following P picture 120 has been received and decoded. It is therefore common practice that the natural order of the pictures is changed in transmission in order to send the independent reference P pictures 120 before the dependent B pictures 130. The natural order is restored at the decoder prior to display.

In video systems deployed in broadcasting (and most other professional applications), a two dimensional image of a scene is usually scanned in a raster fashion from top left to bottom right, in a series of so-called horizontal lines and then each scan is repeated regularly to produce a sequence of pictures. The resolution or sharpness of the picture is determined by the number of picture elements or pixels allocated to the scan. The shape of the picture, its aspect ratio, determines the relationship between the number of horizontal and vertical pixels. In most digital video systems (especially broadcast) these numbers are standardised.

It is typical of television pictures that their representation takes one of two forms. Either the individual picture scans are completed using only one pass of the image, or they are done in two parts, where half the scan is done in a first pass, where only the odd numbered horizontal lines are taken, and the second half is done a second pass, where the remaining even numbered lines are taken. The former scan is called Progressive or Sequential scan, and the latter is called an Interlaced scan.

The first pass of the interlaced scan produces the so-called Top Field and the second pass the Bottom Field. The two fields together cover the same number of pixels as the complete Progressive scan and the complete picture is called a Frame or Picture.

The various picture formats used in the industry are denoted by a convention that gives the number of horizontal lines forming the picture, followed by the letter, I or P, to define whether an Interlaced or Progressive format is used, for example 1080i = 1080 horizontal lines in Interlaced scan mode, whilst 720p = 720 horizontal lines in Progressive scan mode, etc.

It is clear that any movement in the picture during the Interlace scan will result in a degree of dislocation between the pixels of each Field, and that the degree of dislocation will be more severe the greater the speed of motion. This dislocation can cause a significant loss of efficiency in the compression of moving pictures and so it is better to code rapidly moving picture sequences Field by Field. All currently used video compression methods recognise this issue and allow both Field and Frame modes to be chosen using a Picture Adaptive Field/ Frame (PAFF) method as the picture behaviour demands.

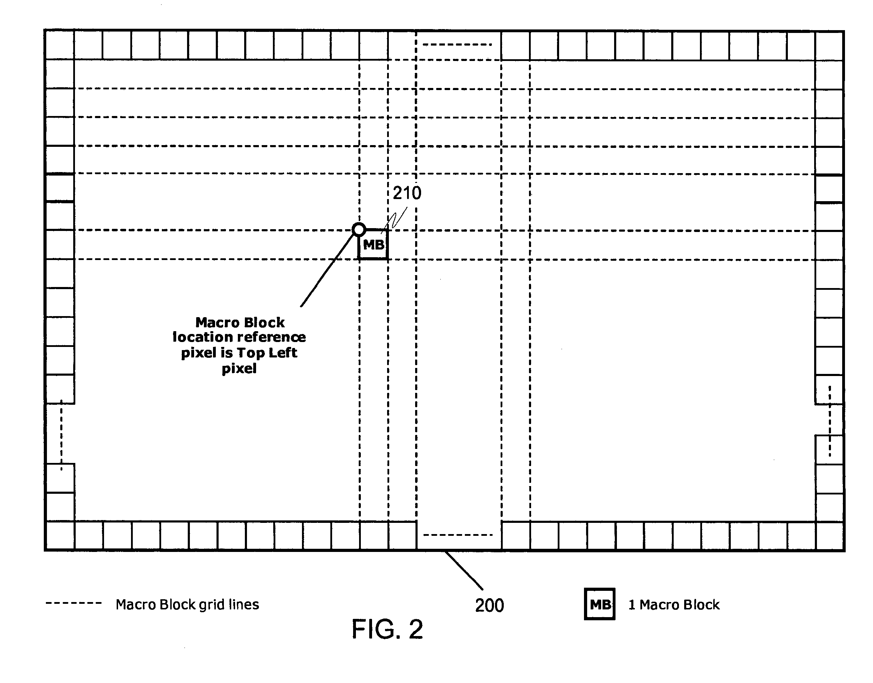

The ITU-T H.264 (MPEG 4 part 10) standard is used widely in the most recent commercial video compression products, and includes among its features the use of GOPs and a Field/Frame mode. In particular the coding of both P and B pictures in the GOP uses Inter-Field or Frame predictive methods. In order to extract the best performance from the method, it divides each complete picture 200, either a Frame or a Field, into a large number of contiguous, rectilinear blocks of pixels as illustrated by Fig. 2. The most significant of these blocks is a square group of pixels called a Macroblock (MB) 210 that is always 16 x 16 luminance pixels is size. All the major analytical processing elements are performed on the luminance signal with the results being applied to both Luminance and Chrominance. The predictive coding process operates primarily at MB level and the coding of a given MB 210 in a given picture is performed using a prediction from a block or blocks within another picture 200 or pictures in the GOP 100 used as references, and which have already been coded.

However, the H. 264 Inter prediction method allows not only whole MBs 210 to be predicted from a number of reference pictures, but it also allows various sub- divisions or Partitions of MBs to be predicted (some of which are known as Sub- Macroblocks- SMB- rather than Partitions) .

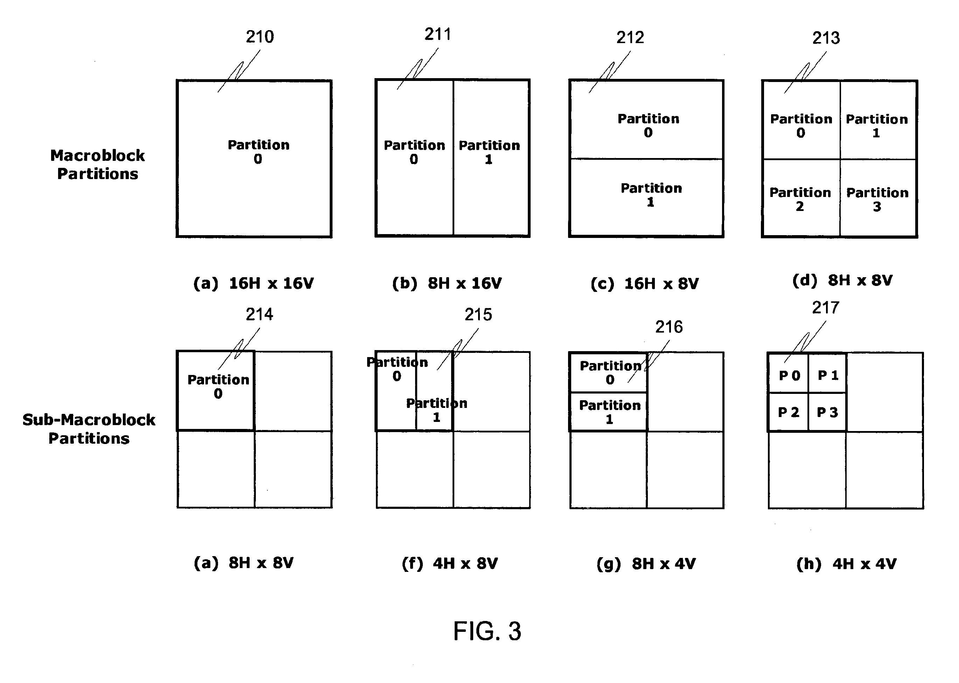

For example, as illustrated by Figs. 3(a) - (d), in addition to the whole MB option 210, there are: two partitions 8 pixels horizontally x 16 pixels vertically 211; two partitions each 16 pixels horizontally x 8 pixels vertically 212; and four partitions 8 pixels horizontally x 8 pixels vertically 213 can be selected. Each may have a MV assigned.

It is also possible (in H.264), for each MB to be sub-divided to form SMBs of 8x8 pixels that may also be Partitioned as illustrated by Figs. 3(e) - (h). The options are that SMBs may each be treated as: a whole SMB 214; or partitioned into 4 pixels x 8 pixels 215; two 8 pixels x 4 pixels 216; or four 4 pixels x 4 pixels blocks 217. In a given MB the SMB partitions may be different in each SMB.

Figs. 3(a)-(h) are illustrations of all possible subdivisions of the MB 210 and show the labelling convention to identify each partition. This added sophistication compared to MPEG-2, for example, contributes to the superior performance of the H.264 compression standard. In the particular case of encoding a B Field/Frame the reference pictures may be from previous pictures in display order - so called reference list0 pictures - or from later pictures in display order - reference list1.

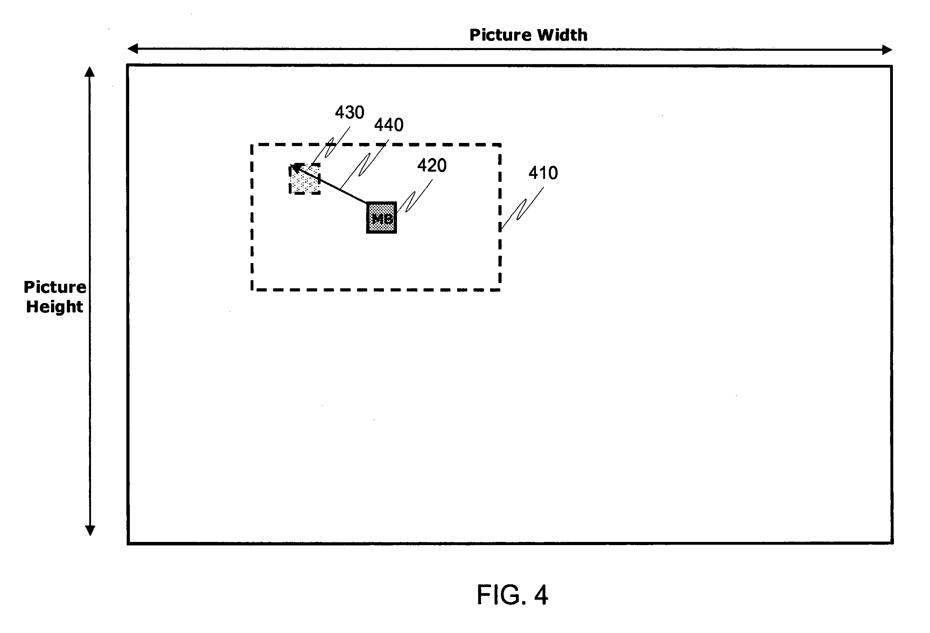

Where significant amounts of motion occur, good prediction performance can be obtained by compensating for that motion by seeking to find blocks of pixels in selected reference pictures 430 that match a given block in the picture currently being coded 420 (i.e. the picture of interest). The amount of movement for each MB between successive pictures is detected and measured using a searching process called Motion Estimation (ME) and is expressed as a Motion Vector (MV) 440. The result is illustrated in Fig. 4, where the region of the picture 410 over which a search is made is also identified.

The search area is symmetrically arranged around the centre of the MB. The MV, that is the position of the best match for the MB, is expressed as the number of pixels vertically and horizontally from the reference position to the MB. Whilst the MV properties are defined in current video compression standards, the ME process is not and video compression product manufacturers are free to devise and implement their own methods. The MV is used in the encoding process, but is also conveyed to the decoder to enable that decoder to identify the correct reference blocks to be used in reconstructing each MB in the picture. Motion search methods are commonly used to identify a number of best match blocks, or candidates, from a single reference picture or from several of them. These candidates can be combined in list0/list1 pairs to produce Bi-predicted candidates. Furthermore 16x16 pixel MBs 210, and 8x8 pixel partitions 214 may also be predicted using the so-called Direct Mode.

As a result of all these options there may be several Inter prediction candidates for each MB and each Partition that must be compared to find the best, most efficient coding. This flexibility in the number of choices available improves the performance of the method, but at the expense of the additional processing resources required to evaluate each of the coding options. Each assessment must be completed within the duration period of the MB. The computing power and speed to do this are challenging, and so an efficient practical method of achieving the result is extremely desirable. For example, in a high definition encoder working on a 1920 x 1080 pixel picture format (1 080p), where a typical Frame period is 33.3 milliseconds (at the worst case scenario of 60 Hz display rate) there are 120 x 68 = 8160 MBs, each MB therefore having to be completely coded in less than 4 microseconds.

To achieve efficient and accurate video encoding the comparison of the candidates ideally takes account of how good the quality of the output image will be, and also how many bits will be taken to encode the candidate. The Rate-Distortion Optimization technique solves this problem by taking into account both a video quality metric, measuring the Distortion as the deviation from the source material, and the bit cost for each possible decision outcome. All current commercial video compression products and methods employ some form of RDO in their implementation.

The most commonly used RDO process is expressed in the following equation:

$$RDO\ Result = \lambda R + D$$

where "RDO Result" is a measure of the quality of encoding, A is the Lagrangian multiplier, R is a measure of the Bit Rate, based on a bit cost estimate, and D is a measure of the picture Distortion value based on an estimate of the deviation of the coded image from the original.

The bit cost estimate R is comprised of three main components representing the contributions to the total bit cost. These are:

(a) the Motion Vector Differences (MVD) contribution $R_{MV}$;
(b) the coded transform coefficients or residuals contribution, $R_R$; and
(c) the contribution from the other syntax elements of the macroblock layer syntax Ro.

Once assembled the complete stream of coded data is passed through an Entropy coding stage that uses complex statistical analysis to further reduce the bit rate. A thorough calculation of the bit rate cost would ideally include the entropy encoding stage, but it is very complex to do so, and is hence not practical.

To perform a thorough and complete RDO assessment of a High Definition (HD) picture over a large area out of each of a number of reference pictures, for each MB and possible MB partition, requires considerable computational resources and is currently impractical despite being the theoretically desirable method. Practical solutions are therefore required that offer high performance with computational resources that are affordable. It has been found that dedicated hardware resources can offer the best solution to this problem, by allowing the most processing steps to be carried out per unit time, and hence evaluation of more options to be achieved within a given clocking rate. The use of general purpose computing resources or DSP devices that run software solutions is feasible, but they do not provide the benefits of dedicated solutions.

It is desirable to address the way in which MV estimates are calculated by assuring the most efficient use of given hardware resources, so that the available MV options can be assessed optimally during ME.

Both H.264 as a standard compression method, and RDO as a means of optimising performance, are known. However, there are many aspects of the implementation of a particular compression standard for an encoder that are not defined by the standard and are hence left to the designer of a particular implementation. These include the particular method of motion vector selection used (i.e. the motion search or Motion Estimation (ME) method). Motion estimation can be designed to include a simple form of RDO by including both a distortion term normally calculated using sum of absolute differences (SAD) of pixel values, and a rate cost term normally calculated from the size of the motion vectors difference (MVD) from the pseudo motion vector predictor (MVP), in calculating the score used for comparing best match positions.

A high performance 1080i H.264 encoder may use, for example, four reference fields and 16x8, 8x16 and 8x8 partitions, with a search range of +/-120 by +/-56 pixels. For a real-time broadcast video encoder of this type generally only dedicated hardware designs based on high speed Field Programmable Gate Array (FPGA) or Application Specific Integrated Circuit (ASIC) devices are capable of the required processing.

There are many different possible motion search methods, and there are many different methods in use within H.264 software and hardware video encoders. Examples of currently known Motion Search methods include:

Exhaustive methods, that search every possible position within the search area in every reference picture. If the search range covers the whole reference picture then this results in the best possible match for every picture, giving the best video encoding performance. For non-Real Time applications or those deployed for low resolution pictures this method is sometimes a practical option. However, for a real-time 1080i broadcast quality High Definition encoder exhaustively searching even a moderate search range results in more computation required than is practical, and so some compromises have to be made that require adaptation of the exhaustive search.

Sub- sampled Hierarchical methods. The methods have several stages:

- The first stage searches every possible position within the search range using a sub-sampled version of either the Source picture, each reference picture or both. Sub-sampling significantly decreases the number of pixels involved in computation and so eases implementation problems. Sub-sampling by a factor of 2 in each axis results in a sixteen (i.e. $2^4$) fold decrease in computation load, and sub-sampling by a factor of 4 in each axis provides a 256 (i.e. $4^4$) fold decrease.
- Later stages use the full image to refine the search around the best result from the first stage.

While the sub-sampling method of computation makes real-time encoding feasible, sub-sampling the image decreases the accuracy of pixel block matches. The greater the degree of sub-sampling, the greater the inherent uncertainty in the search results and so sub-sampling can result in rapidly diminishing returns. For some demanding video sequences, and for HDTV applications, sub-sampling leads to significant false matching to real motion in the first stage, which cannot be corrected in the later stages. This leads to sub-optimal results, which reduces video encoding performance.

A state of the art method currently used within the JVT H.264 reference software is called the un-symmetrical cross multi-hexagonal search method (UMHexagonS). This method has been shown to perform well for HD video, giving well-matched motion vectors at a reasonable computational cost.

The hexagonal method has a number of stages:

1. An initial search to find the best candidate out of the [0,0] position, the 4 neighbour MB's MVs positions and a MVP position. Only the exact position is searched each time.
2. A 2-pixel spaced cross search across the search range centred at the best result from stage 1, i.e. intersecting vertical and horizontal lines of positions.
3. A small exhaustive search over a square area centred at the best result from stage 2.
4. A sparse search in 16-point hexagonal patterns radiating out over the search range centred at the best result from stage 1, i.e. a set of concentric "circles", each "circle" being a set of 16 points along the sides of a hexagon.
5. A small 6-point hexagonal search centred around the best result so far.
6. Repeat stage 5 (up to a maximum of 5 times) until convergence on one position.

Despite its apparent performance advantages, this method is difficult to implement efficiently in practical hardware (FPGA or ASIC) for the following reasons:

- The method requires data to be fetched for a complex pattern of positions (the pattern is complex because the hexagonal shape does not lie conveniently on a rectilinear grid of pixels and because the centre of the hexagonal shape is not known in advance). Data fetched for 1 position cannot easily be used for another neighbouring position due to the hexagonal patterns and variations in the method and so the fetching process is not efficient.
- The multiple sequential stages, which require different levels of computation, make the method difficult to implement efficiently in a highly parallel design.
- The time taken to compute the method for one MB is not constant due to the variable number of stage 6 iterations (i.e. repeats of stage 5, depending on the rate of convergence). To ensure that the field/frame time is not exceeded, but is fully utilized for all picture content, is complex.
- If MB partitions are searched independently from the whole MB, the best positions for them will diverge from the best position for the MB, hence separate resources must be used for the searching each of the partitions, which increases the design complexity, hence size on die, and costs to implement.

Fast Integer Pel and Fractional Pel Motion Estimation for JVT" published from JVT of ISO/IEC MPEG & ITU- T VCEG, document no. JVT- F017, 6th meeting (5 to 13 December 2002) Awaji, Island (XP002548236), describes a plurality of motion vector search algorithms, such as "hierarchical fractional pel search algorithm (HFPS) in JVT" and "center biased fractional pel search algorithm (CBFPS) ". HFPS, for example, comprises a 1/2- pel search to find the best 1/2- pel motion vector, followed by a 1/4- pel search around the best 1/2- pel position in order to find the best 1/4- pel motion vector. By way of further example, CBFPS is described as an iterated search procedure.

## Summary

Accordingly, the following invention, as defined in the appended claims, describes a motion search method and apparatus that offer better performance than currently employed methods, providing a set of MV candidates that can be used in later stages of encoding.

## Brief description of the drawings

An efficient method of Motion Estimation in hardware for digital video will now be described, by way of example only, with reference to the accompanying drawings in which:

Fig. 1 shows an exemplary Group of Pictures structure showing prediction relationships;

Fig. 2 shows how a complete picture of a digital video sequence is divided into macroblocks;

Fig. 3 shows the different partition types for macroblocks and sub-macroblocks allowed by the H.264 compression standard;

Fig. 4 shows an exemplary search area, relative to a complete picture, for a given source macroblock, with a best match position and resultant Motion Vector;

Fig. 5 shows a high level flow diagram of a method of motion estimation according to an embodiment of the present invention;

Fig. 6 shows neighbouring macroblocks whose Motion Vector estimates are used in the initial stage of the method of motion estimation according to an embodiment of the present invention;

Fig. 7 shows the initial search stage of the method of motion estimation according to an embodiment of the present invention;

Fig. 8 shows the main search stage of the method of motion estimation according to an embodiment of the present invention;

Fig. 9 shows the prediction search stage of the method of motion estimation according to an embodiment of the present invention;

Fig. 10 shows the extended search stage A of the method of motion estimation according to an embodiment of the present invention;

Fig. 11 shows the extended search stage B of the method of motion estimation according to an embodiment of the present invention;

Fig. 12 shows example search regions for the initial stage of Fig. 7, according to the method of motion estimation according to an embodiment of the present invention;

Fig. 13 shows the search region for the main stage of Fig. 8, according to the method of motion estimation according to an embodiment of the present invention;

Fig. 14 shows an example search region for the prediction stage of Fig. 9, according to the method of motion estimation according to an embodiment of the present invention;

Fig. 15 shows example search regions for the extended search A stage of Fig. 10, according to the method of motion estimation according to an embodiment of the present invention;

Fig. 16 shows example search regions for the extended search B stage of Fig. 11, according to the method of motion estimation according to an embodiment of the present invention;

Fig. 17 shows all the search regions of Figs. 12 to 16 superimposed together;

Fig. 18 shows a block schematic diagram of hardware adapted to carry out the method of motion estimation according to an embodiment of the present invention;

Fig. 19 shows an exemplary pipeline, showing how an embodiment of the invention overcomes pipeline delays.

## Detailed description

An embodiment of the invention will now be described with reference to the accompanying drawings in which the same or similar parts or steps have been given the same or similar reference numerals.

The invention is a motion search method of comparable or better performance than the existing solutions, but which can also be efficiently implemented in hardware (FPGA or ASIC). Its purpose is to choose a number of integer pixel candidate MVs for the current MB and its partitions. These candidates are then refined to sub-pixel MVs and presented as possible coding options to the MB encoding process.

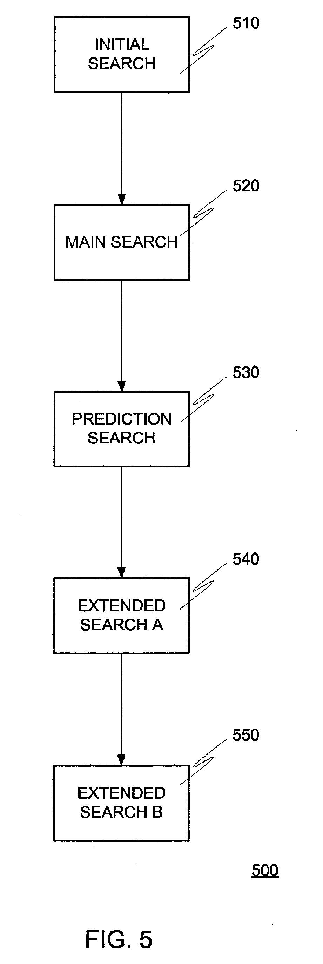

The method has the following stages, which are illustrated in Fig. 5:

1. Initial search 510. A 1 pixel spaced (i.e. exhaustive) search around the [0,0] position, the 4 neighbour MB prediction positions and the Motion Vector Predictor (MVP) position.

2. Main search 520. A 4 pixel (or more) spaced search in a sparse rectangular grid array covering the whole search range. Note this search is not dependent upon the result from the Initial search.

3. Prediction search 530. A larger 1 pixel spaced search centred on the best result of stage 1.

4. Extended Search A 540. For the whole MB and each partition independently, a 2 pixel spaced search centred on the best result so far out of stages 1 to 3. The complete set of these searches is done before progressing to the next stage.

5. Extended Search B 550. For the whole MB and each partition independently, a 1 pixel spaced search centred on the best result so far out of stages 1 to 4. The results of this search will be the results of the ME for the current MB and its partitions.

Stages 1 to 3 can be carried out concurrently for each of the MB and sub-MB partition sizes, whereas Stages 4 and 5 are carried out for MB first, then partition0 16x8, then partition1 16x8, etc (i.e. in decreasing partition size). Note that not all partition sizes are used in every implementation; hence some may be skipped (see below for more details).

These stages are described in more detail below.

The following are definitions as per the H.264 video compression standard:

- source MB 420 - the current MB being encoded, i.e. the MB that is being tested at each position.
- source MB partitions - possible partitions of the current MB being encoded.

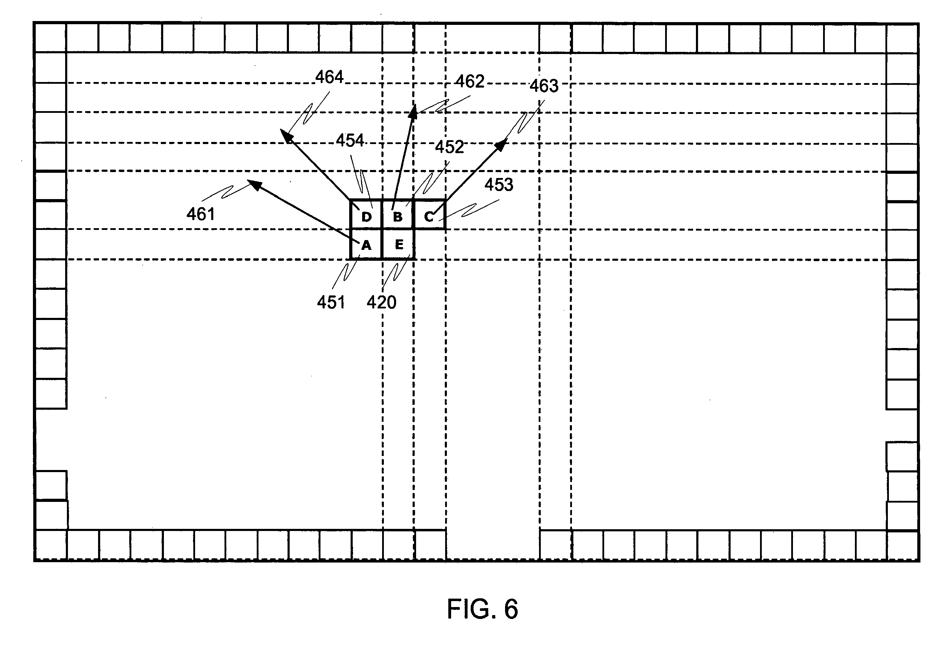

• MB A 451 - the source MB to the left of the one being encoded - i.e. the previous MB to be encoded (see Fig. 6).
• MB B 452 - the source MB above the one being encoded (see Fig. 6).
• MB C 453 - the source MB diagonally above and to the right of the one being encoded (see Fig. 6).
• MB D 454 - the source MB diagonally above and to the left of the one being encoded (see Fig. 6).
• reference pictures - previously encoded pictures kept as reference, against which the best match for the source MB we will attempt to find.

The pseudo Motion Vector Predictor (MVP) of stage 1 (f) (see below) is calculated from the MVs of the neighbours of the same reference as follows:

1. If MB A, MB B and MB C are available, then for each component the MVP is equal to the median of the 3 MVs: 461 462 463.
2. If MB C is not available, then the MV for MB D is used instead 464.
3. If MB A is not available, then [0,0] is taken to be its MV - i.e. a zero MV.
4. If none of the neighbours from the row above are available then the MV value for MB A is used 461.

This pseudo MVP portion of the method above is based on the H.264 definition of the calculation of the real MVP (see H.264 section 8.4.1.3.1). In most implementations, the real MVP cannot be calculated at this time, as the decision on how to encode the neighbours has not been taken. The pseudo MVP assumes that the neighbours are encoded using motion compensation from the same reference picture.

The stages identified above will now be described in greater detail as follows:

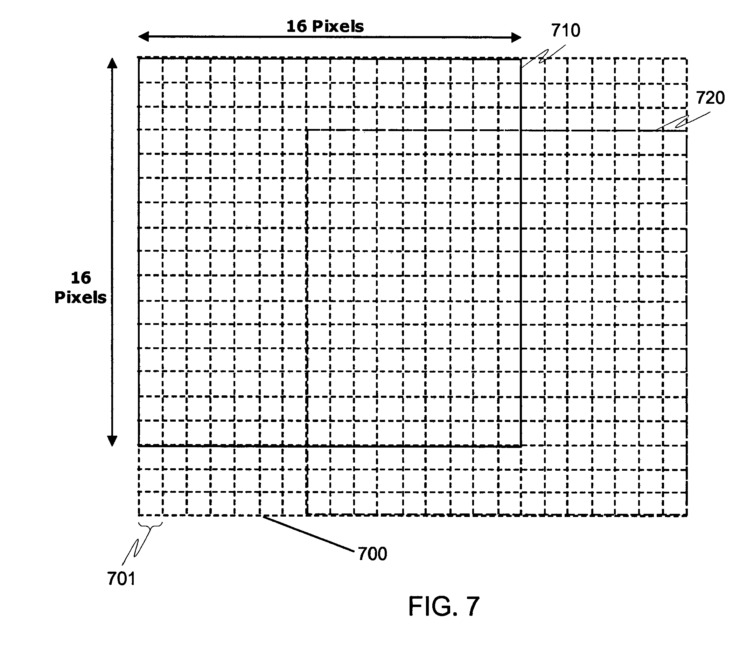

1. Initial search.
This first stage is intended to review the MV results found by the estimation of previous MBs in the vicinity of the current MB with a view to finding suitable MV estimates that can be used for the source MB. That is, the pixels of a MB in the current picture are the source data for a comparison with pixels taken from the regions in the reference pictures around those previously estimated MVs. An exhaustive search is performed over a 1 pixel 701 grid 700 for an 8x4 array of positions (see Fig. 7, from a first MB position 710 to a last MB position 720) around 6 initial positions located at the following places:

a. The [0,0] position. The majority of blocks in a picture are often stationary so that a good prediction for the MV of the source MB is the MV for the MB in the same place in the reference picture, i.e. the [0,0] Motion Vector. A search around this point could be successful in the presence of small amounts of motion or due to the effect of noise.

b. The position predicted by using the MV found for the MB A neighbour 461 within the reference picture currently being searched (see Fig. 6). There is a high probability that the motion of a block will be closely matched to that of a neighbouring block.

c. The position predicted by using the MV found for the MB B neighbour 462 within the reference picture currently being searched (see Fig. 6). There is a high probability that the motion of a block will be closely matched to that of a neighbouring block.

d. The position predicted by using the MV found for the MB C neighbour 463 within the reference picture currently being searched (see Fig. 6). There is a high probability that the motion of a block will be closely matched to that of a neighbouring block.

e. The position predicted by using the MV found for the MB D neighbour 464 within the reference picture currently being searched (see Fig. 6). There is a high probability that the motion of a block will be closely matched to that of a neighbouring block.

f. The position predicted by using a pseudo Motion Vector Predictor based on the real MVP as defined above. The pseudo MVP is a derived MV based on a combination of the MVs of adjacent MBs. It can be the case that the motion of a block along one axis may be close to that of one of its neighbours, but the motion in the other axis may be close to that of another neighbour. The pseudo MVP is calculated as the median MV of the neighbouring MBs done separately for each axis. If a MB/Partition is coded with a MV equal to the MVP then it will have zero MVD cost, making it an efficient coding choice.

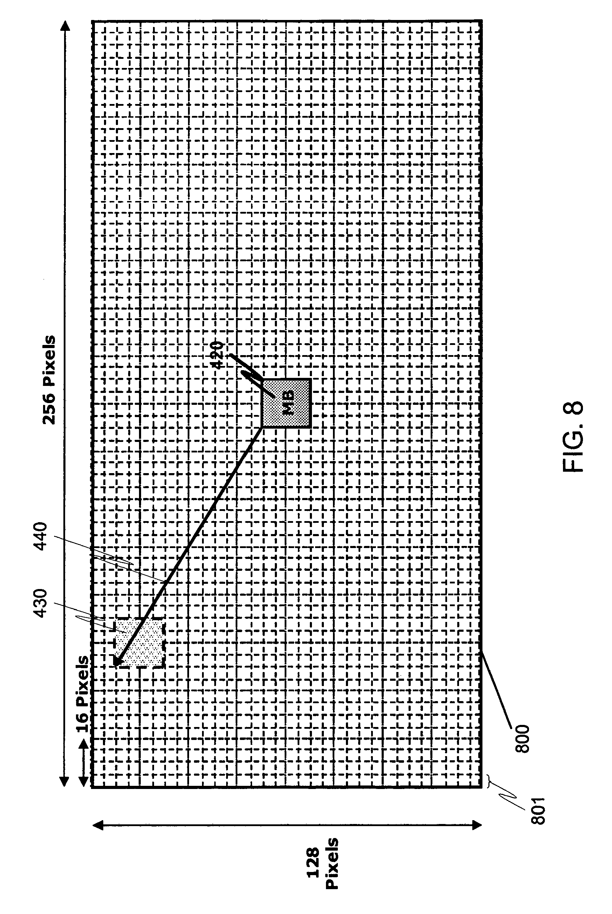

2. Main search.
This stage covers the whole selected search range (+/- 120 by +/- 56), but searches a rectangular grid 800 spaced at 4 pixel intervals 801, centred at the current source MB position, as illustrated by Fig. 8. The source MB 420 is compared to every possible MB position on the grid, to arrive at a best match 430, and associated MV 440. A minority of video sequences have fast motion where MVs between fields/frames will be large. This stage is designed to have a good probability of picking up these large MVs 440 without the high computational cost of searching all positions with single pixel precision. Assuming the object(s) in motion are of a reasonable size (greater than 8x8 pixels) and of fairly consistent texture then at least one of the positions in this search should give a reasonable match. The extended search stages (see stages 4 & 5 below) should then refine this initial MV match down to the nearest pixel. This search is extensive and takes up a considerable part of the time available to calculate results.

3. Prediction search.

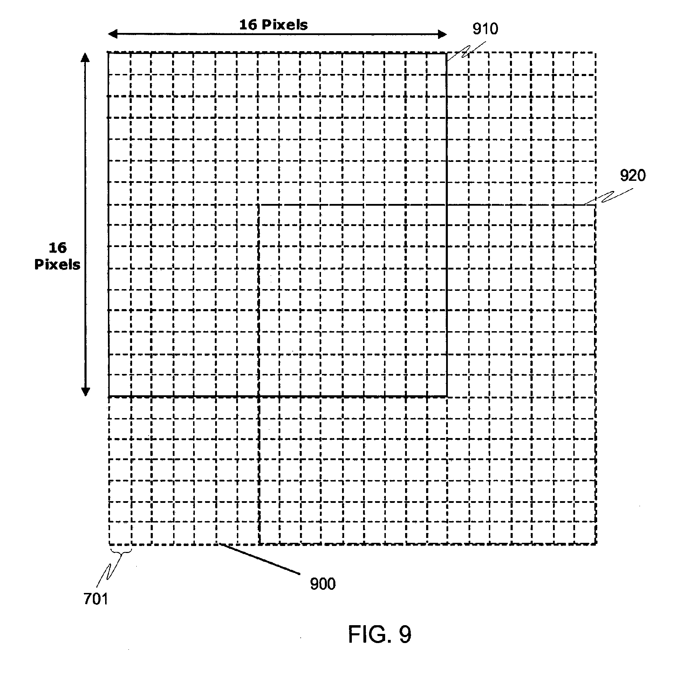

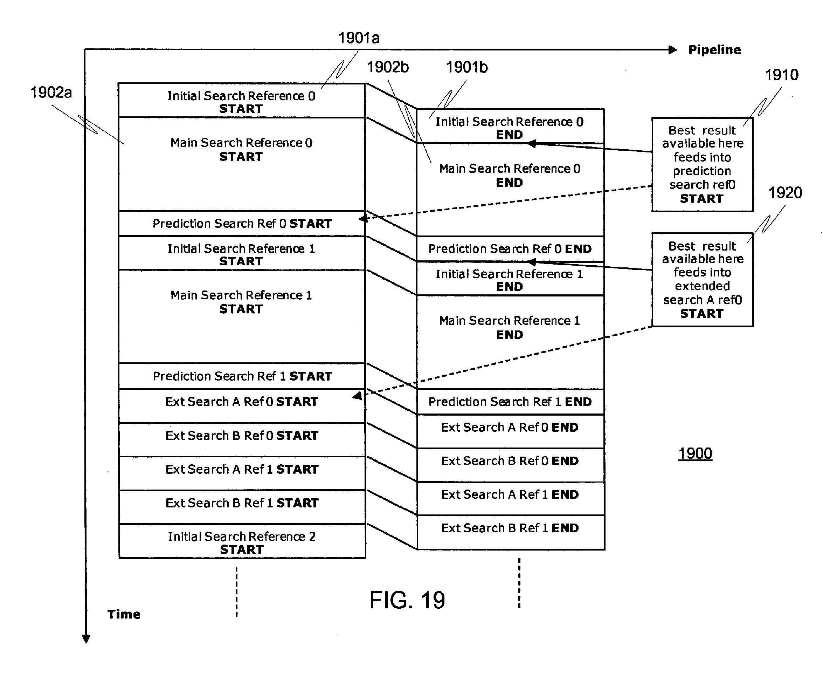

This stage is an exhaustive search 900, i.e. to 1 pixel precision 701, for an 8x8 array of positions (see Fig. 9, from a first MB position 910 to a last MB position 920) centred on the best result of stage 1. It is assumed that the initial search has correctly identified that the motion is most closely correlated with one of the 6 initial positions, but also that the relatively small 8x4 initial search did not cover the best match position. So this stage will extend the area around the best position from that initial search to give a greater chance of discovering the actual best match position. As this stage depends upon the initial search results, it does not directly follow the initial search stage to allow for pipeline delay in the implementation, without unused cycles between stages as illustrated in Fig. 19 and described in more detail below.

4. Extended Search A.

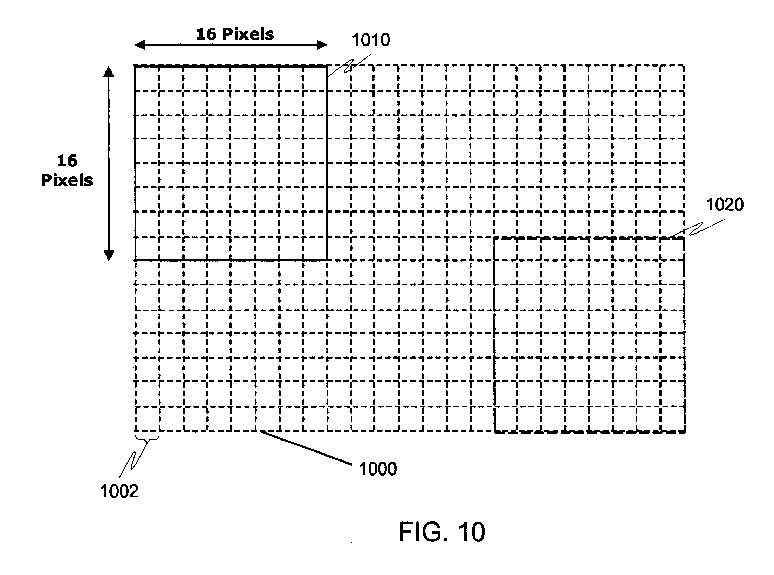

The best match positions and costs for the whole MB and each of its partitions separately were identified in stages 2 and 3 above and the best of them selected as the optimum candidate. This first extended stage is centred on that best result so far and is run independently for each partition. A 32x16 pixel area 1000 is searched over a grid array spaced at 2 pixels 1002, from a first MB position 1010 to a last MB position 1020, as illustrated by Fig. 10. This stage is designed to refine the MV towards the best possible match without the computational cost of searching all the positions within the 32x16 pixel area.

5. Extended Search B.

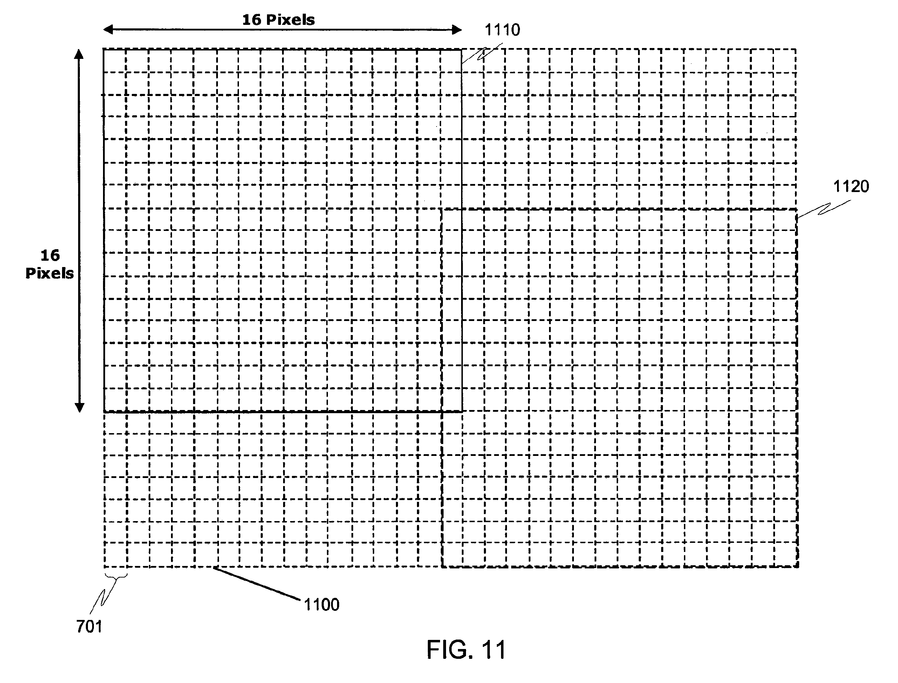

This stage is run for each partition independently for the same reason as extended search A. A 16x8 pixel area 1100, centred on the best result so far for the partition, is searched exhaustively (i.e. at 1 pixel spacing 701), from a first MB position 1110 to a last MB position 1120, as illustrated in Fig. 11. This stage is designed to refine the MV down to the best possible match MV with single pixel precision.

The foregoing has provided a general overview of the proposed motion estimation method. The aforementioned search window sizes are all compromises between speed of comparison vs accuracy, and hence other sizes may be used. However, the aforementioned search window sizes have been found by experimentation to produce very acceptable results, whilst still being fully executable within the frame rate of a 60Hz HDTV signal. The following provides more details on an exemplary specific implementation for a 1080i video signal.

1080i Implementation example

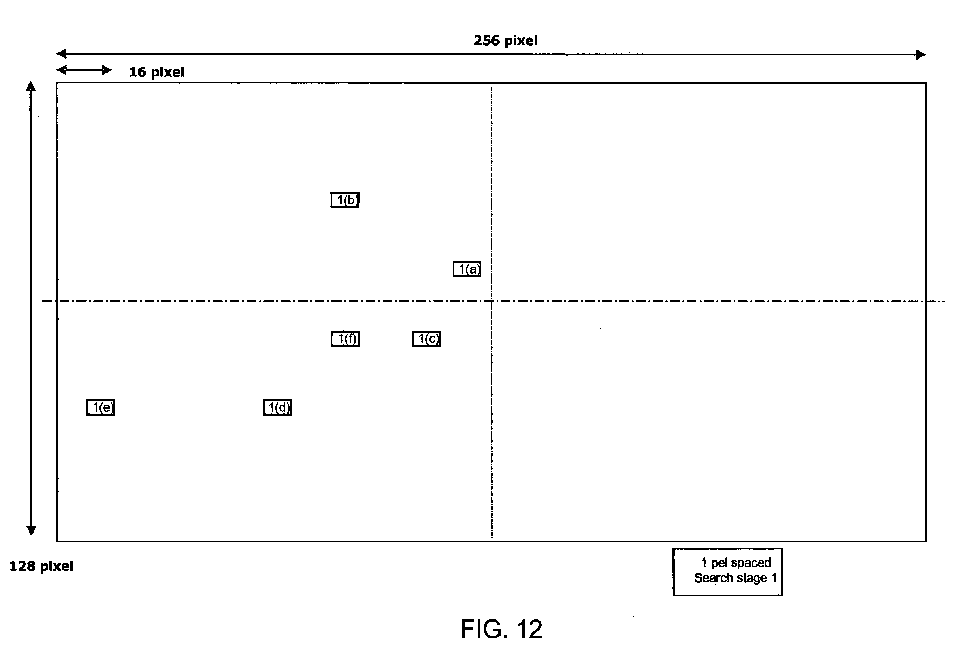

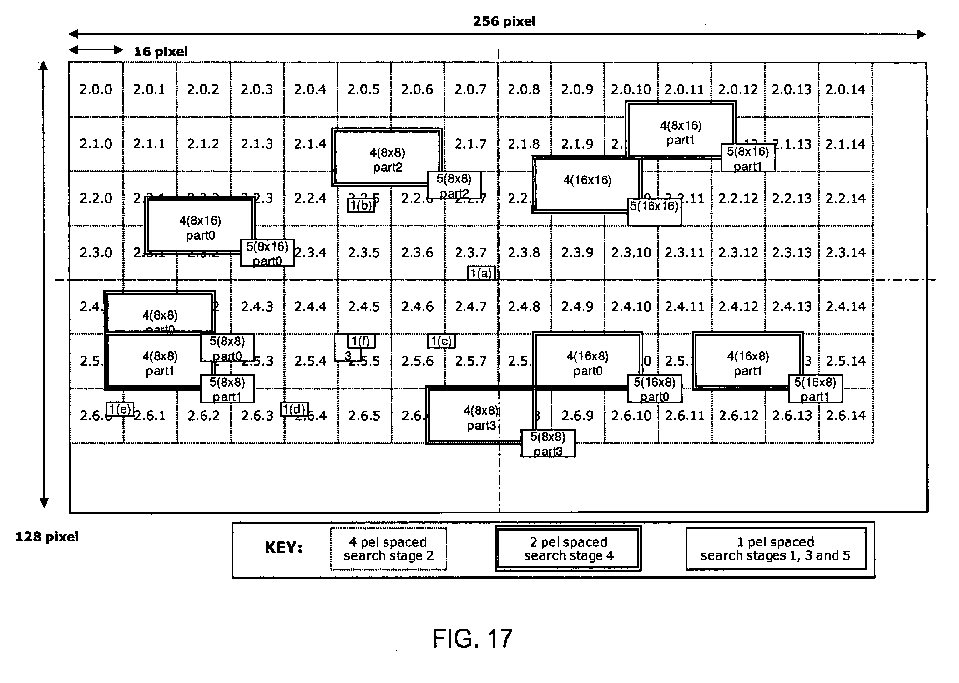

Figures 12 to 16 illustrate all the searches, stage by stage, for clarity and Figure 17 superimposes them all. They are all example figures based on coding a 1080i picture sequence. The large number of searches provided by the present invention has made it necessary to spread the searches widely over the search area for the purposes of illustrative clarity. In practice, the searches are more likely to be clustered closely together. In all of Figs. 12 to 17, the results from the different stages, reference pictures and MB Partitions are identified by the form and legend of each rectangular block.

1. Figure 12 shows the 6 search regions for the Initial search stage (items 1 (a) to 1 (f) above).

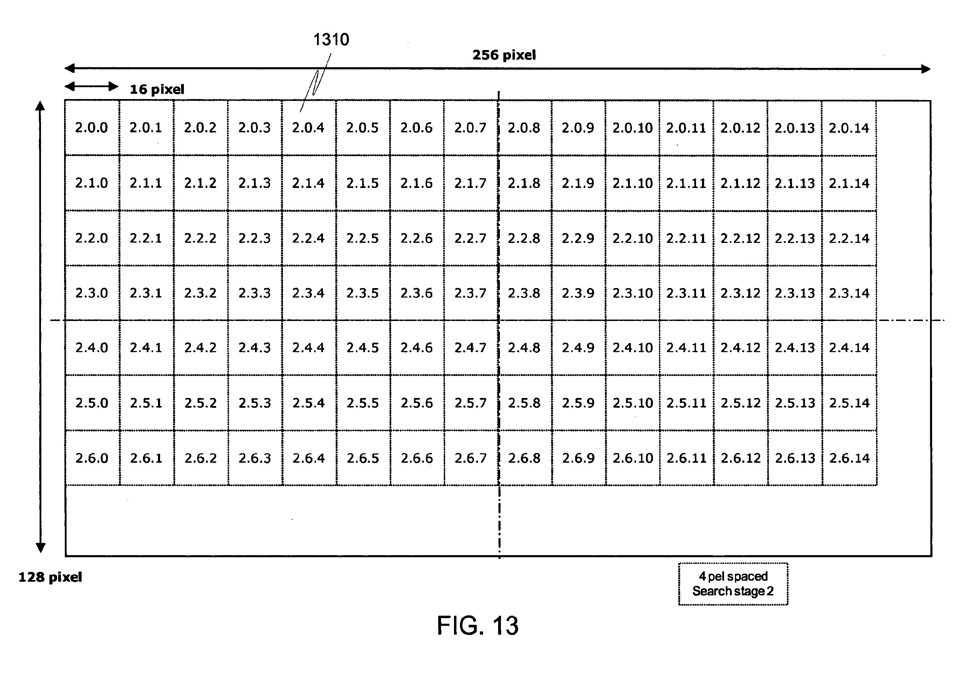

2. Figure 13 shows the search regions for the Main Search stage (Item 2 above) where all positions on a 4 pixel spaced grid are searched within the search area. The blocks 1310 shown outlined with dotted lines and with labels such as 2.x.y each contain all 16 of the search positions that are conducted in one clock cycle. A sequential search through all the blocks will result in a unique best match for the whole search and this produces a MV that points to somewhere in the search region but only to a precision of the nearest 4 pixels. This search is the most intensive of all to carry out.

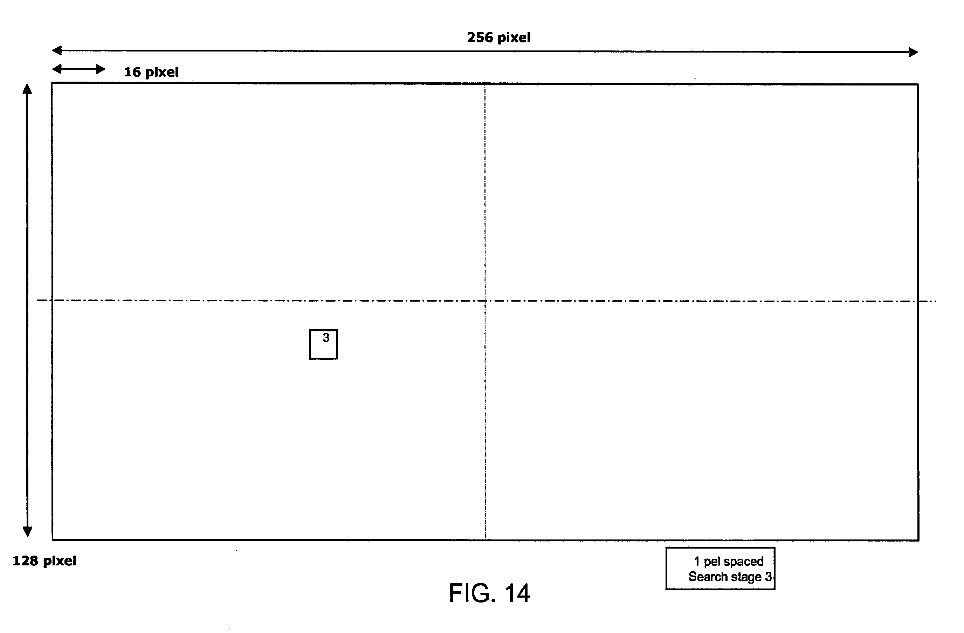

3. Figure 14 shows the prediction search stage where the best result from the initial search stage is used as the centre of another search.

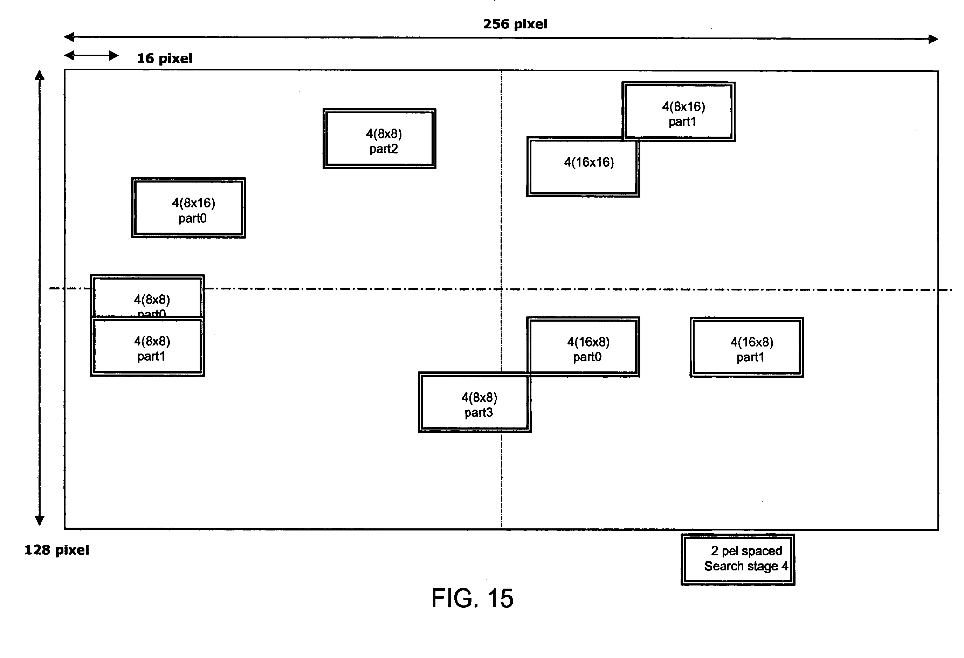

4. Figure 15 shows the search regions for extended search A. The nine search regions for this stage are shown and each is labelled with its partition size and index.

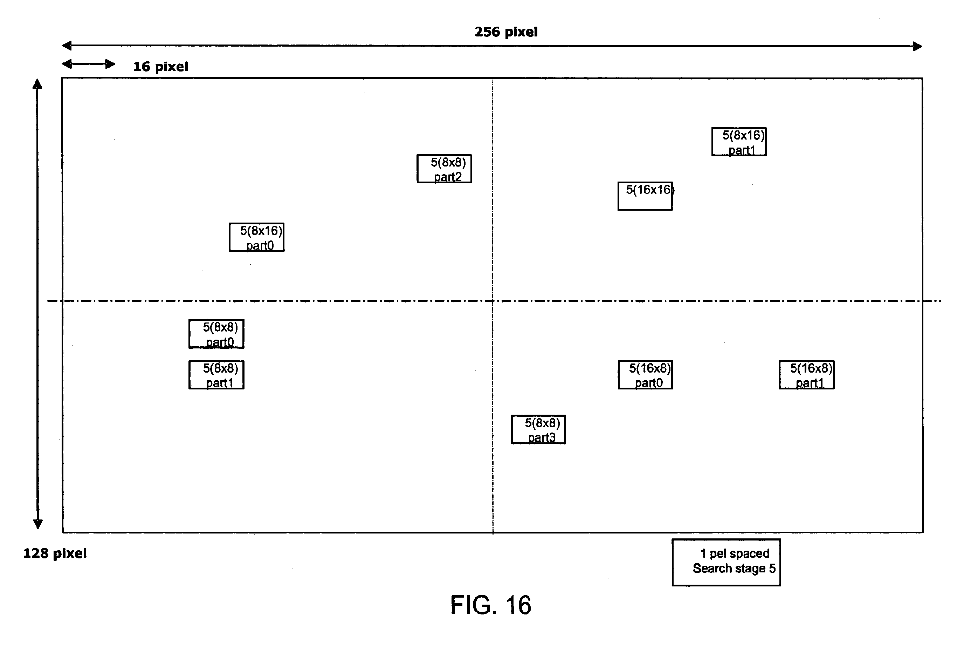

5. Figure 16 shows the search regions for extended search B. The nine search regions for this stage are shown and each is labelled with its partition size and index.

Figure 17 shows all the regions of all the search stages superimposed.

Once one complete reference picture has been searched according to the above described method, the set of MV results is stored and the process moves on to provide MVs for other reference pictures. What results from these searches is a set of MVs per reference picture that is passed on to the sub-pixel refinement and encoding process.

Implementation Details

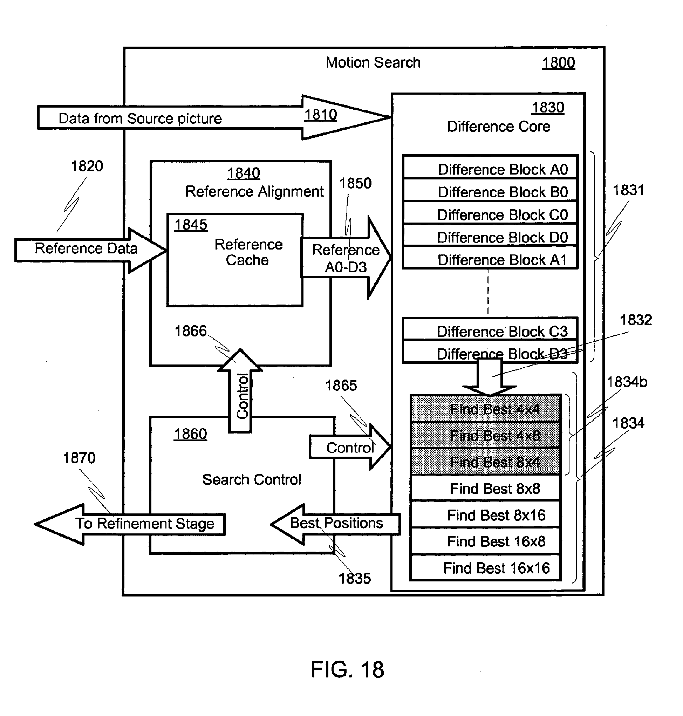

The above described method can be implemented in hardware in the form shown in Figure 18. This design can be used for both 1080i and 720p standard picture configurations, 1080p configuration or all partitions configuration. The grey shaded Find Best blocks for 4x4, 4x8 and 8x4 (1834b) are only used in the 'all partitions configuration' (see more details below).

To achieve the throughput required, 16 positions are searched per clock cycle. The 16 positions are labelled A0 to D3.

The major processing blocks of the Motion Search hardware 1800 in Figure 18 are:

1. Reference Alignment 1840. Within its cache 1845 this block stores, for each of the four reference pictures, an area which is at least the size of the search range around the current MB. In response to the control signals from the search control block 1860 it produces the reference data (16x16 pixels) for all the 16 positions being searched in each clock cycle.

2. Search Control 1860. This block is the main state machine, which runs the search method and controls the other blocks, via control signal paths 1865 and 1866. It takes the best positions 1835 calculated by the Find Best portions 1834 of the difference core 1830 (see below), and provides the results 1870 to a refinement stage.

3. Difference Core 1830. This block calculates the difference values, using difference blocks 1831, between the source data 1810 and reference data 1820 (as passed from the reference cache 1845, in the form of reference data A0-D3 1850) for the 16 positions searched each clock cycle. The differences are calculated initially on a 4x4 pixel block basis, and the appropriate blocks are hierarchically summed to give the difference values for all possible partitions. For each partition in each of the 16 search positions, a rate estimate is calculated from the MVD to the pseudo MVP. This allows a simplified use of the RDO equation (Cost = $\lambda$R + D), to give a score for each partition at each position. These values are used to find the best position during the search stage, for each partition.

1080i / 720p Configuration

These designs are based on searching a range of +/-120 by +/-56 pixels in four reference pictures for all MBs within a 1080i field or 720p frame. The higher the number of reference pictures (fields or frames) searched, the better the chances of finding the best match in all the possible references. Limitations on the available processing time means there is a limit on the number of pictures that can be practically used, but the number of references is also limited by the level setting as described in H.264 Appendix A. It is assumed that only the partition sizes 16x16, 16x8, 8x16 and 8x8 are used for these cases.

The search control block runs the search method for a pair of reference pictures together to allow pipelining (see Fig. 19) as follows:

1. Initial search Reference 0 = 12 cycles. As an 8x4 area is searched and a 4x4 area is searched per cycle this stage takes 2 cycles for each of the 6 centre positions searched.

2. Main search Reference 0 = 105 cycles. As a 240x112 area is searched and a 16x16 area is searched per cycle this stage takes 15x7 cycles.

3. Prediction search Reference 0 = 4 cycles. As an 8x8 area is searched and a 4x4 area is searched per cycle this stage takes 4 cycles. This stage is centred on the best position from the initial search.

4. Initial search Reference 1 = 12 cycles. As above.

5. Main search Reference 1 = 105 cycles. As above.

6. Prediction search Reference 1 = 4 cycles. As above.

7. Extended Search A Reference 0 = 32 cycles.

   a. 16x16 MB = 8 cycles. As a 32x16 area is searched and an 8x8 area is searched per cycle this stage takes 8 cycles. This stage is centred on the best position for the 16x16 MB so far.
   b. 16x8 partitions =[2x] 4 cycles. This stage is performed separately for each 16x8 partition. As a 32x16 area is searched and two 8x8 areas are searched per cycle this stage takes 4 cycles per partition. This stage is centred on the best position for the 16x8 partition so far.
   c. 8x16 partitions = [2x] 4 cycles. This stage is performed separately for each 8x16 partition. As a 32x16 area is searched and two 8x8 areas are searched per cycle this stage takes 4 cycles per partition. This stage is centred on the best position for the 8x16 partition so far.
   d. 8x8 partitions = [4x] 2 cycles. This stage is performed separately for each 8x8 partition. As a 32x16 area is searched and four 8x8 areas are searched per cycle this stage takes 2 cycles per partition. This stage is centred on the best position for the 8x8 partition so far.

8. Extended Search B Reference 0 = 32 cycles.

   e. 16x16 MB = 8 cycles. As a 16x8 area is searched and a 4x4 area is searched per cycle this stage takes 8 cycles. This stage is centred on the best position for the 16x16 MB so far.

f. 16x8 partitions = [2x] 4 cycles. This stage is performed separately for each 16x8 partition. As a 16x8 area is searched and two 4x4 areas are searched per cycle this stage takes 4 cycles per partition. This stage is centred on the best position for the 16x8 partition so far.

g. 8x16 partitions = [2x] 4 cycles. This stage is performed separately for each 8x16 partition. As a 16x8 area is searched and two 4x4 areas are searched per cycle this stage takes 4 cycles per partition. This stage is centred on the best position for the 8x16 partition so far.

h. 8x8 partitions = [4x] 2 cycles. This stage is performed separately for each 8x8 partition. As a 16x8 area is searched and four 4x4 areas are searched per cycle this stage takes 2 cycles per partition. This stage is centred on the best position for the 8x8 partition so far.

9. Extended Search A Reference 1 = 32 cycles. As above.

10. Extended Search B Reference 1 = 32 cycles. As above.

The total cycles taken to run the whole method for two reference pictures is:

$$2 \times [12 + 4 + 105 + 32 + 32] = 378.$$

For four reference pictures it is 756 cycles. Therefore, an implementation of the method running at 189MHz would be sufficient to search a MB within a 4$\mu$s period, which is the requirement for encoding 1080i or 720p in real-time.

It has been shown that increasing the vertical spacing of the grid for the main search stage to 8 (as opposed to 4 discussed above) gives very little performance degradation. As increasing the vertical spacing decreases the number of cycles taken for this main stage to execute (i.e. down to [15x4] = 60 cycles), this in turn allows a reduction in the required clock speed down to 140 MHz.

1080p Configuration

A similar implementation can be used for encoding 1080p frames. The major difference is that only two reference pictures are searched for all the MBs within a 1080p frame, given that each MB must now be calculated within 2$\mu$s (since the progressive picture has twice as many MBs to encode per unit time).

Again to achieve this, 16 positions are searched per clock cycle and it is assumed that the partition sizes 16x16, 16x8, 8x16 and 8x8 only are used.

In this case, the total cycles taken to run the whole algorithm for two reference pictures is:

$$2 \times [12 + 4 + 105 + 32 + 32] = 378.$$

Therefore an implementation of the algorithm running at 189MHz would be sufficient to search a MB within the 2$\mu$s period, which is the requirement for encoding 1080p in real-time.

Again increasing the vertical spacing of the grid for the main search stage to 8 gives very little performance degradation and allows a reduction in required clock speed to 140 MHz.

All Partition Sizes Configuration

The method and apparatus can be run in a configuration where all the partition sizes 16x16, 16x8, 8x16, 8x8, 8x4, 4x8 and 4x4 are used. Partitions sizes below 8x8 have not been shown to give any video encoding performance gain for HD video so are not currently included in the 1080i/720p or 1080p configurations, however they have been shown to give a performance gain for SD video.

An all partition configuration includes the grey blocks in Fig. 19.

The search control block runs the search method for a pair of reference pictures as follows:

1. Initial search Reference 0 = 12 cycles. As for 1080i configuration.

2. Main search Reference 0 = 105 cycles. As for 1080i configuration.

3. Prediction search Reference 0 = 4 cycles. As for 1080i configuration.

4. Initial search Reference 1 = 12 cycles. As for 1080i configuration.

5. Main search Reference 1 = 105 cycles. As for 1080i configuration.

6. Prediction search Reference 1 = 4 cycles. As for 1080i configuration.

7. Extended Search A Reference 0 = 96 cycles.

a. 16x16 MB = 8 cycles. As a 32x16 area is searched and an 8x8 area is searched per cycle this stage takes 8 cycles. This stage is centred on the best position for the 16x16 MB so far.

b. 16x8 partitions = [2x] 4 cycles. This stage is performed separately for each 16x8 partition. As a 32x16 area is searched and two 8x8 areas are searched per cycle this stage takes 4 cycles per partition. This stage is centred on the best position for the 16x8 partition so far.

c. 8x16 partitions = [2x] 4 cycles. This stage is performed separately for each 8x16 partition. As a 32x16 area is searched and two 8x8 areas are searched per cycle this stage takes 4 cycles per partition. This stage is centred on the best position for the 8x16 partition so far.

d. 8x8 partitions = [4x] 2 cycles. This stage is performed separately for each 8x8 partition. As a 32x16 area is searched and four 8x8 areas are searched per cycle this stage takes 2 cycles per partition. This stage is centred on the best position for the 8x8 partition so far.

e. 8x4 partitions = [8x] 2 cycles. This stage is performed separately for each 8x8 partition. As a 32x16 area is searched and four 8x8 areas are searched per cycle this stage takes 2 cycles per partition. This stage is centred on the best position for the 8x4 partition so far.

f. 4x8 partitions = [8x] 2 cycles. This stage is performed separately for each 8x8 partition. As a 32x16 area is searched and four 8x8 areas are searched per cycle this stage takes 2 cycles per partition. This stage is centred on the best position for the 4x8 partition so far.

g. 4x4 partitions = [16x] 2 cycles. This stage is performed separately for each 8x8 partition. As a 32x16 area is searched and four 8x8 areas are searched per cycle this stage takes 2 cycles per partition. This stage is centred on the best position for the 4x4 partition so far.

8. Extended Search B Reference 0 = 96 cycles.

h. 16x16 MB = 8 cycles. As an 16x8 area is searched and a 4x4 area is searched per cycle this stage takes 8 cycles. This stage is centred on the best position for the 16x16 MB so far.

i. 16x8 partitions = [2x] 4 cycles. This stage is performed separately for each 16x8 partition. As a 16x8 area is searched and two 4x4 areas are searched per cycle this stage takes 4 cycles per partition. This stage is centred on the best position for the 16x8 partition so far.

j. 8x16 partitions = [2x] 4 cycles. This stage is performed separately for each 8x16 partition. As a 16x8 area is searched and two 4x4 areas are searched per cycle this stage takes 4 cycles per partition. This stage is centred on the best position for the 8x16 partition so far.

k. 8x8 partitions = [4x] 2 cycles. This stage is performed separately for each 8x8 partition. As a 16x8 area is searched and four 4x4 areas are searched per cycle this stage takes 2 cycles per partition. This stage is centred on the best position for the 8x8 partition so far.

l. 8x4 partitions = [8x] 2 cycles. This stage is performed separately for each 8x8 partition. As a 16x8 area is searched and four 4x4 areas are searched per cycle this stage takes 2 cycles per partition. This stage is centred on the best position for the 8x8 partition so far.

m. 4x8 partitions = [8x] 2 cycles. This stage is performed separately for each 8x8 partition. As a 16x8 area is searched and four 4x4 areas are searched per cycle this stage takes 2 cycles per partition. This stage is centred on the best position for the 8x8 partition so far.

n. 4x4 partitions = [16x] 2 cycles. This stage is performed separately for each 8x8 partition. As a 16x8 area is searched and four 4x4 areas are searched per cycle this stage takes 2 cycles per partition. This stage is centred on the best position for the 8x8 partition so far.

9. Extended Search A Reference 1 = 96 cycles. As above.

10. Extended Search B Reference 1 = 96 cycles. As above.

The total cycles taken to run the whole method for two reference pictures is therefore:

$$2 \times [12 + 4 + 105 + 96 + 96] = 626.$$

For four reference pictures it is double, i.e. 1252 cycles.

Therefore an implementation of the described method running at 63MHz would be sufficient to search a MB within a $20\mu s$ period, which is the time allowed to encode a MB in real time at 720x576 Standard Definition video.

The above described method and apparatus has similar or better performance to other state of the art motion Search methods.

The method can be implemented efficiently in hardware (FPGA or ASIC) at a relatively low clock speed (e.g. 140MHz, as discussed above), even for encoding HDTV video in real-time.

The method allows all the difference blocks to be fully utilised in parallel during the whole MB period, maximising the searching performed for the resources used. Assuming at least two reference pictures, the method can be implemented in a pipelined design, where the method does not need to wait before starting any of the stages for the results of the previous stage.

Searching positions close together within the reference pictures massively reduces the bandwidth requirement on the reference cache. So although 16 positions (each requiring 16x16 pixels of input reference data) are searched in parallel, all the data can be fetched from within one 4 pixel aligned, 32x32 pixel area. The reduced bandwidth requirement and data alignment allows the reference cache to be implemented in internal RAM.

The method searches partitions independently from whole MBs without a large increase in processing, as the first stages (1-3) are common. The difference values calculated for partitions are added together to give the differences values for larger partitions and ultimately the whole MB. Accordingly, the resultant Motion Search method and apparatus is much more efficient in its use of the available processing resources, hence more candidates can be processed within the MB period for a given design size and clock speed.

The method can be applied efficiently for any selection of partition sizes, from no partitions (i.e. only 16x16 MBs), to all possible partitions (i.e. 16x16s MBs down to 4x4s sub-MBs).

The method can be applied efficiently for 2, 4 or any $2^N$ number of reference pictures per MB.

As mentioned previously, the method may be embodied as a specially programmed, or hardware designed, integrated circuit that operates to carry out the method on reference picture data loaded into the said integrated circuit. The integrated circuit may be formed as part of a general purpose computing device, such as a PC, and the like, or it may be formed as part of a more specialised device, such as a games console, mobile phone, portable computer device or specialist/broadcast hardware video encoder.

One exemplary hardware embodiment is that of a Field Programmable Gate Array (FPGA) programmed to carry out the described method, located on a daughterboard of a rack mounted video encoder, for use in, for example, a television studio or location video uplink van supporting an in-the-field news team.

Another exemplary hardware embodiment of the present invention is that of a video encoder comprising an Application Specific Integrated Circuit (ASIC).

**Claims**

1. A method of Motion Estimation in digital video, comprising:

    carrying out an initial search to determine an initial search best candidate motion vector for a source macroblock;
    carrying out a main search to determine a main search best candidate motion vector for a source macroblock;
    carrying out a prediction search, centred on the best candidate from the initial search, to determine a prediction search best candidate motion vector for a source macroblock;
    carrying out a first extended search, centred on the best result from the initial, main and prediction searches, to determine a first extended search best candidate motion vector for a source macroblock;
    carrying out a second extended search, centred on the best result from the initial, main, prediction and[or] first extended searches, to determine a second extended search best candidate motion vector for a source macroblock; and
    providing the second extended search best candidate motion vector to a subsequent video encoding process, wherein the second extended search comprises an exhaustive search of a quadrilateral array of positions; the method being **characterised in that**
    the main search comprises an at least a four pixel spaced apart quadrilateral grid based search of a whole selected search range and wherein the main search is not dependent upon the result from the Initial search;
    the initial search comprises an exhaustive search of a quadrilateral array of partition positions, and is carried out at a plurality of starting search positions;
    the prediction search comprises an exhaustive search of a quadrilateral array of partition positions, centred on a position of the best candidate motion vector from the first initial search;
    the first extended search comprises an at least two pixel spaced apart search of a quadrilateral array of partition positions.

2. The method of claim 1, wherein a one of the starting search positions for the initial search is based upon a motion vector predictor derived from motion vectors of macroblocks neighbouring the source macroblock.

3. The method of claim 2, wherein the neighbouring macroblocks are labelled A to D according to the compression standard in use, wherein:

    macroblock A is the source macroblock to the left of the one being encoded,
    macroblock B is the source macroblock above the one being encoded,
    macroblock C is the source macroblock diagonally above and to the right of the one being encoded, and
    macroblock D is the source macroblock diagonally above and to the left of the one being encoded; and

the pseudo motion vector predictor is derived according to the following rules:

    if motion vectors for the neighbouring macroblocks A, B and C are available, then the pseudo motion vector predictor is the median of said three neighbouring macroblock motion vectors; or

if the motion vector for macroblock C is not available then use the motion vector of macroblock D instead, such that the pseudo motion vector predictor is the median of the A, B and D neighbouring macroblock motion vectors; or if the motion vector for macroblock A is not available, then use the zero motion vector instead, such that the pseudo motion vector predictor is the median of a zero motion vector ([0,0]), B and C neighbouring macroblock motion vectors; or if none of the motion vectors for the neighbouring macroblocks from a row above the source macroblock, then use the motion vector for macroblock A only.

4. The method of any preceding claim, wherein the main search comprises an at least a four pixel spaced apart quadrilateral grid based search of a whole selected search range.

5. The method of claim 4, wherein the main search is a sparse grid search centred at the current macroblock position.

6. The method of claim 4 or 5, wherein the main search comprises an eight pixel spaced apart quadrilateral grid based search.

7. The method of any preceding claim, wherein the prediction search is square, and the remaining searches are rectangular.

8. The method of any preceding claim, wherein a search range used for a particular search step comprises:

between 16 by 8 pixels and 4 by 2 pixels for the initial search;
between +/-240 by +/-112 pixels and +/-60 by +/-28 pixels for the main search;
between 16 by 16 pixels and 4 by 4 pixels for the prediction search;
between 64 by 32 pixels and 16 by 8 pixels for the first extended search; and
between 32 by 16 pixels and 8 by 4 pixels for the second extended search.

9. Motion estimation apparatus comprising:

a search control block; and
a difference core block arranged to calculate difference values, using difference blocks, between source data and reference data;
wherein said search control apparatus is adapted to carry out any of method claims 1 to 8.

10. The apparatus of claim 9, wherein the apparatus is a video encoder.

**Patentansprüche**

1. Verfahren zur Bewegungsschätzung in Digitalvideo, umfassend:

Ausführen einer Anfangssuche, um einen besten Anfangssuche-Kandidatenbewegungsvektor für einen Quellmakroblock zu bestimmen;
Ausführen einer Hauptsuche, um einen besten Hauptsuche-Kandidatenbewegungsvektor für einen Quellmakroblock zu bestimmen;
Ausführen einer Prädiktionssuche, die auf den besten Kandidaten aus der Anfangssuche konzentriert ist, um einen besten Prädiktionssuche-Kandidatenbewegungsvektor für einen Quellmakroblock zu bestimmen;
Ausführen einer ersten erweiterten Suche, die auf das beste Ergebnis aus den Anfangs-, Haupt- und Prädiktionssuchen konzentriert ist, um einen besten Erste-erweiterte-Suche-Kandidatenbewegungsvektor für einen Quellmakroblock zu bestimmen;
Ausführen einer zweiten erweiterten Suche, die auf das beste Ergebnis aus den Anfangs-, Haupt-, Prädiktions- und [oder] Erste-erweiterte-Suchen konzentriert ist, um einen besten Zweite-erweiterte-Suche-Kandidatenbewegungsvektor für einen Quellmakroblock zu bestimmen; und
Bereitstellen des besten Zweite-erweiterte-Suche-Kandidatenbewegungsvektors für einen anschließenden Videocodierprozess,
wobei die zweite erweiterte Suche eine gründliche Suche eines vierseitigen Feldes von Positionen umfasst;
wobei das Verfahren ferner **dadurch gekennzeichnet ist, dass**:

die Hauptsuche eine mindestens vier Pixel beabstandete, vierseitige gitterbasierte Suche eines ganzen ausgewählten Suchbereichs umfasst, und wobei die Hauptsuche nicht vom Ergebnis aus der Anfangssuche abhängt;
die Anfangssuche eine gründliche Suche eines vierseitigen Feldes von Partitionspositionen umfasst und an einer Mehrzahl von Anfangssuchpositionen ausgeführt wird;
die Prädiktionssuche eine gründliche Suche eines vierseitigen Feldes von Partitionspositionen umfasst, die auf eine Position des besten Kandidatenbewegungsvektors aus der ersten Anfangssuche konzentriert ist;
die erste erweiterte Suche eine mindestens zwei Pixel beabstandete Suche eines vierseitigen Feldes von Partitionspositionen umfasst.

2. Verfahren nach Anspruch 1, wobei eine der Anfangssuchpositionen für die Anfangssuche auf einem Bewegungsvektorprädiktor basiert, der von Bewegungsvektoren von zum Quellmakroblock benachbarten Makroblökken abgeleitet wird.

3. Verfahren nach Anspruch 2, wobei die benachbarten Makroblöcke gemäß dem Kompressionsstandard in Verwendung mit A bis D bezeichnet werden, wobei:

Makroblock A der Quellmakroblock links von dem einen ist, der codiert wird,
Makroblock B der Quellmakroblock über dem einen ist, der codiert wird,
Makroblock C der Quellmakroblock diagonal über und rechts von dem einen ist, der codiert wird, und
Makroblock D der Quellmakroblock diagonal über und links von dem einen ist, der codiert wird, und
der Pseudobewegungsvektorprädiktor gemäß den folgenden Regeln abgeleitet wird:

wenn Bewegungsvektoren für die benachbarten Makroblöcke A, B und C verfügbar sind, dann ist der Pseudobewegungsvektorprädiktor der Median der Bewegungsvektoren der drei benachbarten Makroblökke; oder
wenn der Bewegungsvektor für Makroblock C nicht verfügbar ist, dann wird stattdessen der Bewegungsvektor von Makroblock D verwendet, derart dass der Pseudobewegungsvektorprädiktor der Median der Bewegungsvektoren der benachbarten Makroblöcke A, B und D ist; oder
wenn der Bewegungsvektor für Makroblock A nicht verfügbar ist, dann wird stattdessen der Nullbewegungsvektor verwendet, derart dass der Pseudobewegungsvektorprädiktor der Median eines Nullbewegungsvektors ([0,0]) und der Bewegungsvektoren der benachbarten Makroblöcke B und C ist; oder
wenn keiner der Bewegungsvektoren für die benachbarten Makroblöcke aus einer Reihe über dem Quellmakroblock verfügbar ist, dann wird der nur Bewegungsvektor für Makroblock A verwendet.

4. Verfahren nach einem der vorhergehenden Ansprüche, wobei die Hauptsuche eine mindestens vier Pixel beabstandete, vierseitige gitterbasierte Suche eines ganzen ausgewählten Suchbereichs umfasst.

5. Verfahren nach Anspruch 4, wobei die Hauptsuche eine Dünngittersuche ist, die an der aktuellen Makroblockposition zentriert ist.

6. Verfahren nach Anspruch 4 oder 5, wobei die Hauptsuche eine acht Pixel beabstandete, vierseitige gitterbasierte Suche umfasst.

7. Verfahren nach einem der vorhergehenden Ansprüche, wobei die Prädiktionssuche quadratisch ist, und die restlichen Suchen rechteckig sind.

8. Verfahren nach einem der vorhergehenden Ansprüche, wobei ein Suchbereich für einen bestimmten Suchschritt umfasst:

zwischen 16 mal 8 Pixel und 4 mal 2 Pixel für die Anfangssuche;
zwischen +/-240 mal +/-112 Pixel und +/-60 mal +/-28 Pixel für die Hauptsuche;
zwischen 16 mal 16 Pixel und 4 mal 4 Pixel für die Prädiktionssuche;
zwischen 64 mal 32 Pixel und 16 mal 8 Pixel für die erste erweiterte Suche;
zwischen 32 mal 16 Pixel und 8 mal 4 Pixel für die zweite erweiterte Suche.

9. Bewegungsschätzungsvorrichtung, umfassend:

einen Suchsteuerblock; und
einen Differenzkernblock, der so ausgelegt ist, dass er unter Verwendung von Differenzblöcken Differenzwerte zwischen Quelldaten und Referenzdaten berechnet;
wobei die Suchsteuervorrichtung so ausgelegt ist, dass sie einen der Verfahrensansprüche 1 bis 8 ausführt.

10. Vorrichtung nach Anspruch 9, wobei Vorrichtung ein Videocodierer ist.

**Revendications**

1. Procédé d'estimation de mouvement dans une vidéo numérique, comprenant de :

effectuer une recherche initiale pour déterminer un vecteur de mouvement meilleur candidat à une recherche initiale d'un macrobloc source ;
effectuer une recherche principale pour déterminer un vecteur de mouvement meilleur candidat à une recherche principale d'un macrobloc source ;
effectuer une recherche de prédiction, centrée sur le meilleur candidat d'après la recherche initiale, pour déterminer un vecteur de mouvement meilleur candidat à une recherche de prédiction d'un macrobloc source ;

effectuer une première recherche étendue, centrée sur le meilleur résultat des recherches initiale, principale et de prédiction, pour déterminer un premier vecteur de mouvement meilleur candidat à une recherche étendue d'un macrobloc source ;

effectuer une seconde recherche étendue, centrée sur le meilleur résultat des recherches initiale, principale, de prédiction, et/ou première recherche étendue, pour déterminer un second vecteur de mouvement meilleur candidat à une recherche étendue d'un macrobloc source ; et

fournir le second vecteur de mouvement meilleur candidat à une seconde recherche étendue à un processus de codage vidéo subséquent, dans lequel la seconde recherche étendue comprend une recherche exhaustive d'une matrice de positions quadrilatérale ;

le procédé étant **caractérisé en ce que**

la recherche principale comprend une recherche basée sur une grille quadrilatérale espacée d'au moins quatre pixels d'une plage de recherche totale sélectionnée et dans lequel la recherche principale n'est pas fonction du résultat de la recherche initiale ;

la recherche initiale comprend une recherche exhaustive d'une matrice quadrilatérale de positions de partition, et est effectuée à une pluralité de positions de recherche de départ ;

la recherche de prédiction comprend une recherche exhaustive d'une matrice quadrilatérale de positions de partition, centrée sur une position du vecteur de mouvement meilleur candidat provenant de la première recherche initiale ;

la première recherche étendue comprend une recherche espacée d'au moins deux pixels d'une matrice quadrilatérale de positions de partition.

2. Procédé selon la revendication 1, dans lequel une des positions de recherche de départ pour la recherche initiale est basée sur un prédicteur de vecteur de mouvement déduit des vecteurs de mouvement des macroblocs voisins du macrobloc source.

3. Procédé selon la revendication 2, dans lequel les macroblocs voisins sont étiquetés A à D selon la norme de compression utilisée, dans lequel :

le macrobloc A est le macrobloc source à gauche de celui étant codé,

le macrobloc B est le macrobloc source au-dessus de celui étant codé,

le macrobloc C est le macrobloc source en diagonale au-dessus et à droite de celui étant codé, et

le macrobloc D est le macrobloc source en diagonale au-dessus et à gauche de celui étant codé ; et

le prédicteur de pseudo vecteur de mouvement est déduit selon les règles suivantes :

si les vecteurs de mouvement pour les macroblocs voisins A,B et C sont disponibles, alors le prédicteur de pseudo vecteur de mouvement est le médian desdits trois vecteurs de mouvement de macrobloc voisin ; ou

si le vecteur de mouvement pour le macrobloc C n'est pas disponible, utiliser alors le vecteur de mouvement de macrobloc D à la place, de sorte que le prédicteur de pseudo vecteur de mouvement soit le médian des vecteurs de mouvement de macrobloc voisin A,B et D ; ou

si le vecteur de mouvement pour le macrobloc A n'est pas disponible, utiliser alors le vecteur de mouvement zéro à la place, de sorte que le prédicteur de pseudo vecteur de mouvement soit le médian d'un vecteur de mouvement zéro ([0,0]) et des vecteurs de mouvement de macrobloc voisin C ; ou

si aucun des vecteurs de mouvement pour les macroblocs voisins ne provient d'une rangée au-dessus du macrobloc source, utiliser alors seulement le vecteur de mouvement pour le macrobloc A.

4. Procédé selon une quelconque des revendications précédentes, dans lequel la recherche principale comprend une recherche basée sur une grille quadrilatérale espacée d'au moins quatre pixels d'une plage de recherche sélectionnée totale.

5. Procédé selon la revendication 4, dans lequel la recherche principale est une recherche de grille clairsemée centrée à la position de macrobloc actuelle.

6. Procédé selon les revendications 4 ou 5, dans lequel la recherche principale comprend une recherche basée sur une grille quadrilatérale espacée de huit pixels.

7. Procédé selon une quelconque des revendications précédentes, dans lequel la recherche de prédiction est carrée, et les recherches restantes sont rectangulaires.

8. Procédé selon une quelconque des revendications précédentes, dans lequel une plage de recherche utilisée pour une étape de recherche particulière comprend :

entre 16 fois 18 pixels et 4 fois 2 pixels pour la recherche initiale ;

entre +/- 240 par +/- 112 pixels et +/- 60 fois +/- 28 pixels pour la recherche principale ;

entre 16 fois 16 pixels et 4 fois 4 pixels pour la recherche de prédiction ;

entre 64 fois 32 pixels et 16 fois 8 pixels pour la première recherche étendue ; et

entre 32 fois 16 pixels et 8 fois 4 pixels pour la seconde recherche étendue.

9.  Dispositif d'estimation de mouvement comprenant :

un bloc de commande de recherche ; et

un bloc central de différence agencé afin de calculer des valeurs différentes, en utilisant des blocs de différence, entre les données de source et les données de référence ;

dans lequel ledit dispositif de commande de recherche est adapté afin de mettre en oeuvre les étapes de procédé 1 à 8.

10. Dispositif selon la revendication 9, dans lequel le dispositif est un codeur vidéo.

FIG. 1

EP 2 392 139 B1

Macro Block location reference pixel is Top Left pixel

210

200

------- Macro Block grid lines

MB 1 Macro Block

FIG. 2

EP 2 392 139 B1

**Macroblock Partitions**

| 210 | 211 | 212 | 213 |
|---|---|---|---|
| Partition 0 | Partition 0 \| Partition 1 | Partition 0 / Partition 1 | Partition 0 \| Partition 1 / Partition 2 \| Partition 3 |

**(a) 16H x 16V**    **(b) 8H x 16V**    **(c) 16H x 8V**    **(d) 8H x 8V**

**Sub-Macroblock Partitions**

| 214 | 215 | 216 | 217 |
|---|---|---|---|
| Partition 0 | Partition 0 / Partition 1 | Partition 0 / Partition 1 | P 0 \| P 1 / P 2 \| P 3 |

**(a) 8H x 8V**    **(f) 4H x 8V**    **(g) 8H x 4V**    **(h) 4H x 4V**

FIG. 3

Picture Width

Picture Height

430
440
420
410

MB

FIG. 4

INITIAL
SEARCH

510

MAIN SEARCH

520

PREDICTION
SEARCH

530

EXTENDED
SEARCH A

540

EXTENDED
SEARCH B

550

500

FIG. 5

FIG. 6

EP 2 392 139 B1

16 Pixels

710

720

16 Pixels

701

700

FIG. 7

FIG. 8

EP 2 392 139 B1

FIG. 9

EP 2 392 139 B1

16 Pixels

16 Pixels

1010

1020

1000

1002

FIG. 10

EP 2 392 139 B1

FIG. 11

FIG. 12

EP 2 392 139 B1

EP 2 392 139 B1

1310

**256 pixel**

**16 pixel**

| 2.0.0 | 2.0.1 | 2.0.2 | 2.0.3 | 2.0.4 | 2.0.5 | 2.0.6 | 2.0.7 | 2.0.8 | 2.0.9 | 2.0.10 | 2.0.11 | 2.0.12 | 2.0.13 | 2.0.14 |
|---|---|---|---|---|---|---|---|---|---|---|---|---|---|---|
| 2.1.0 | 2.1.1 | 2.1.2 | 2.1.3 | 2.1.4 | 2.1.5 | 2.1.6 | 2.1.7 | 2.1.8 | 2.1.9 | 2.1.10 | 2.1.11 | 2.1.12 | 2.1.13 | 2.1.14 |
| 2.2.0 | 2.2.1 | 2.2.2 | 2.2.3 | 2.2.4 | 2.2.5 | 2.2.6 | 2.2.7 | 2.2.8 | 2.2.9 | 2.2.10 | 2.2.11 | 2.2.12 | 2.2.13 | 2.2.14 |
| 2.3.0 | 2.3.1 | 2.3.2 | 2.3.3 | 2.3.4 | 2.3.5 | 2.3.6 | 2.3.7 | 2.3.8 | 2.3.9 | 2.3.10 | 2.3.11 | 2.3.12 | 2.3.13 | 2.3.14 |
| 2.4.0 | 2.4.1 | 2.4.2 | 2.4.3 | 2.4.4 | 2.4.5 | 2.4.6 | 2.4.7 | 2.4.8 | 2.4.9 | 2.4.10 | 2.4.11 | 2.4.12 | 2.4.13 | 2.4.14 |
| 2.5.0 | 2.5.1 | 2.5.2 | 2.5.3 | 2.5.4 | 2.5.5 | 2.5.6 | 2.5.7 | 2.5.8 | 2.5.9 | 2.5.10 | 2.5.11 | 2.5.12 | 2.5.13 | 2.5.14 |
| 2.6.0 | 2.6.1 | 2.6.2 | 2.6.3 | 2.6.4 | 2.6.5 | 2.6.6 | 2.6.7 | 2.6.8 | 2.6.9 | 2.6.10 | 2.6.11 | 2.6.12 | 2.6.13 | 2.6.14 |

**128 pixel**

4 pel spaced
Search stage 2

FIG. 13

256 pixel

16 pixel

3

128 pixel

1 pel spaced
Search stage 3

FIG. 14

30

EP 2 392 139 B1

FIG. 15

FIG. 16

**256 pixel**

**16 pixel**

| 2.0.0 | 2.0.1 | 2.0.2 | 2.0.3 | 2.0.4 | 2.0.5 | 2.0.6 | 2.0.7 | 2.0.8 | 2.0.9 | 2.0.10 | 2.0.11 | 2.0.12 | 2.0.13 | 2.0.14 |

| 2.1.0 | 2.1.1 | 2.1.2 | 2.1.3 | 2.1.4 | 4(8x8) part2 | | 2.1.7 | 2.1.8 | 2.1.9 | 2. | 4(8x16) part1 | | 2.1.13 5(8x16) part1 | 2.1.14 |

| 2.2.0 | 2. | 2. | 2.3 | 2.2.4 | 2.2.5 5(8x8) part2 1(b) | 2.2.6 2.2.7 | 2.2. | 4(16x16) | 2. 5(16x16) | 2.11 | 2.2.12 | 2.2.13 | 2.2.14 |

4(8x16) part0

| 2.3.0 | 2. | 2. | 2. 5(8x16) part0 | 2.3.4 | 2.3.5 | 2.3.6 | 2.3.7 1(a) | 2.3.8 | 2.3.9 | 2.3.10 | 2.3.11 | 2.3.12 | 2.3.13 | 2.3.14 |

| 2.4. | 4(8x8) part0 | | 2.4.3 | 2.4.4 | 2.4.5 | 2.4.6 | 2.4.7 | 2.4.8 | 2.4.9 | 2.4.10 | 2.4.11 | 2.4.12 | 2.4.13 | 2.4.14 |

| 2.5. | 4(8x8) part1 | 5(8x8) part0 2.5.3 | 2.5.4 | 1(f) 3 2.5.5 | 1(c) 2.5.6 | 2.5.7 | 2.5. | 4(16x8) part0 | 0 2.5. 5(16x8) part0 | 4(16x8) part1 | | 3 2.5.14 5(16x8) part1 |

5(8x8) part1

| 2.6.0 1(e) 2.6.1 | 2.6.2 | 2.6.3 | 1(d) 2.6.4 | 2.6.5 | 2.6. | 4(8x8) part3 3 5(8x8) part3 | 2.6.9 | 2.6.10 | 2.6.11 | 2.6.12 | 2.6.13 | 2.6.14 |

**128 pixel**

| KEY: | 4 pel spaced search stage 2 | 2 pel spaced search stage 4 | 1 pel spaced search stages 1, 3 and 5 |

**FIG. 17**

FIG. 18

FIG. 19